# EUROPEAN PATENT SPECIFICATION

(11) **EP 3 840 933 B1**
(45) Date of publication and mention of the grant of the patent: **06.04.2022**
(21) Application number: 19755647.5
(22) Date of filing: 22.08.2019
(51) Int. Cl.: B29C 64/118, B33Y 80/00, B33Y 10/00, B29C 64/209

(54) **STRESS RELEASING OBJECT BY MULTIPLE-MATERIAL FDM PRINTING**
SPANNUNGSFREISETZUNGSOBJEKT DURCH FDM-DRUCK MIT MEHREREN MATERIALIEN
OBJET AVEC RELACHEMENT DE TENSIONS INTERNES PAR IMPRESSION FDM DE MATÉRIAUX MULTIPLES

(30) Priority: 24.08.2018 EP 18190615
(43) Date of publication of application: 30.06.2021
(73) Proprietor: Signify Holding B.V., 5656 AE Eindhoven (NL)
(72) Inventor: VAN HAL, Paulus, Albertus, 5656 AE Eindhoven (NL); ZUIDEMA, Patrick, 5656 AE Eindhoven (NL); WOUTERS, Bert, 5656 AE Eindhoven (NL); HIKMET, Rifat, Ata, Mustafa, 5656 AE Eindhoven (NL)
(74) Representative: Verweij, Petronella Daniëlle
(86) International application number: PCT/EP2019/072444
(87) International publication number: WO 2020/039022

(56) References cited:
- EP-A2- 3 004 435
- WO-A1-2015/077262
- WO-A1-2018/106704

## Description

### FIELD OF THE INVENTION

The invention relates to a method for manufacturing a 3D (printed) item. The invention also relates to the 3D (printed) item obtainable with such method. Further, the invention relates to a lighting system including such 3D (printed) item. Yet further, the invention also relates to a 3D printer.

### BACKGROUND OF THE INVENTION

The use of 3D printing for fabricating objects is known in the art. US2015/0266244, for instance, describes a system for fabricating an object which includes an extruder for one or more deposition materials. The extruder has at least one nozzle with a nozzle tip that includes an exit orifice and has a width that is equal to or larger than a width of the exit orifice. The system also includes a controller coupled with the extruder, the controller configured to apply a correction factor that has been calculated for a path of the nozzle based on a slope of a surface of an object to be fabricated. The correction factor for a positive slope is different from that for a negative slope. The extruder is configured to cause movement of the nozzle along the path to deposit material on the slope of the surface of the object, and the correction factor removes differences in thickness of the deposited material caused by the slope in relation to the path.

WO2015/077262 and EP3004435 both disclose fused deposition modeling comprising co-extrusion of dissimilar polymers, e.g. in the form of core-shell extrudates.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

Typically, FDM printed objects have residual stresses due to differential cooling of the object. The object may start to warp, which results in deformations of the 3D printed object. Hence, it is an aspect of the invention to provide an alternative 3D printing method and/or 3D (printed) item, or an alternative 3D printable material, which preferably further at least partly obviate(s) one or more of above-described drawbacks. The present invention may have as object to overcome or ameliorate at least one of the disadvantages of the prior art, or to provide a useful alternative.

It surprisingly appears that by using different materials for the 3D printed item, stress can be released. Hence, to reduce the residual stresses, amongst others it is herein proposed to use an additional elastomeric material, which is embedded into the FDM printed object. A core-shell nozzle can be used, in which the core material and the shell material may be chosen freely (dependent upon the desired properties of the 3D printed item).

Hence, in a first aspect the invention provides a method comprising 3D printing a 3D item ("item") by means of fused deposition modelling (or "fused deposition modelling printing"), the method comprising a 3D printing stage comprising layer-wise depositing an extrudate comprising 3D printable material to provide the 3D item comprising 3D printed material, wherein during at least part of the 3D printing stage the extrudate comprises a core-shell extrudate comprising a core comprising a core material, and a shell comprising a shell material, wherein the core material comprises a first thermoplastic material and the shell material comprises a second thermoplastic material different from the first thermoplastic material, or the core material comprises the second thermoplastic material and the shell material comprises the first thermoplastic material, wherein the first thermoplastic material is an elastomeric material having a Young's modulus in the range of 2 to 200 MPa, (ia) a first low glass transition temperature T_{LG1} of at maximum 0 °C, and (ib) a first high glass transition temperature T_{HG1} or a first high melting temperature T_{HM1} of at minimum at 60 °C, and wherein the second thermoplastic material has a Young's modulus in the range of 1 to 10 GPa, and one or more of a second glass transition temperature T_{G2} and a second melting temperature T_{M2} of at minimum 60 °C.

Amongst others, by combining a thermoplastic material that has relatively low or essentially no elastomeric properties with a thermoplastic material having elastomeric properties, residual strass in the obtained 3D item can be reduced. In this way, the 3D printed objects are produced more reliable. Further, the physical (and chemical) properties of the 3D printed object can be tuned, also at specific positions of the 3D printed object. It may also be possible to design parts that have anisotropic (physical) properties.

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Essentially, the materials are the same material, as the thermoplastic material upstream of the printer head, downstream of the printer head, and when deposited, is essentially the same material.

Herein, the term "3D printable material" may also be indicated as "printable material. The term "polymeric material" may in embodiments refer to a blend of different polymers but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating (at Tₚᵣᵢₙₜ) the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating (at Tₚᵣᵢₙₜ) the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former.

As indicated above, the invention thus provides a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), polypropylene (or polypropene), polycarbonate (PC), polystyrene (PS), PE (such as expanded- high impact-polythene (or polyethene), low density polythene (LDPE), high density polythene (HDPE)), PVC (polyvinyl chloride), polychloroethene, such as thermoplastic elastomer based on copolyester elastomers, polyurethane elastomers, polyamide elastomers polyolefine based elastomers, styrene based elastomers, etc.. Optionally, the 3D printable material comprises a 3D printable material selected from the group consisting of Urea formaldehyde, Polyester resin, Epoxy resin, Melamine formaldehyde, thermoplastic elastomer, etc.. Optionally, the 3D printable material comprises a 3D printable material selected from the group consisting of a polysulfone. Elastomers, especially thermoplastic elastomers, are especially interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic polyurethanes (TPU (TPU)) elastomer, thermoplastic copolyesters (TPC (TPE-E)) elastomer, and thermoplastic polyamides (TPA (TPE-A)) elastomer.

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-1-pentene and 1-octadecene.

The term 3D printable material is further also elucidated below, but especially refers to a thermoplastic material, optionally including additives, to a volume percentage of at maximum about 60% vol.% (of the additives), especially at maximum about 30 vol.%, such as at maximum 20 vol.% (relative to the total volume of the 3D printable material).

The printable material may thus in embodiments comprise two phases. The printable material may comprise a phase of printable polymeric material (such as defined above), especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. Particles may e.g. comprise one or more of organic (cross-linked polymers) particles, inorganic particles, such as glass, metal particles (e.g. aluminum), graphite particles, etc. The number of particles in the total mixture is especially not larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material especially refers to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

All of the above in relation to the composition of the 3D printable material also applies to the 3D printed material (unless indicated to the contrary or unless clear from the description). Hence, for instance the term "3D printed material" may especially refer to a thermoplastic material, optionally including additives, to a volume percentage of at maximum about 60 vol.% (of the additives), especially at maximum about 30 vol.%, such as at maximum 20 vol.% (relative to the total volume of the 3D printable material. Or, for instance, the printed material may thus in embodiments comprise two phases. Hence, essentially any embodiment in relation to the composition, chemical properties (and physical properties) in relation to the 3D printed material may also apply to the 3D printed material.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc.. Instead of the term "receiver item" also the term "substrate" may be used. The phrase "printing on a receiver item" and similar phrases include amongst others *also* printing on a separate substrate on or comprised by a printing platform, a print bed, a support, a build plate, or a building platform, etc.. Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material is deposited, by which the 3D printed item is generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc.. Post-processing may include smoothening the ribbed structures, which may lead to an essentially smooth surface.

As indicated above, during at least part of the 3D printing stage the extrudate comprises a core-shell extrudate. This phrase indicates that during the printing stage also 3D printing may be executed wherein no core-shell extrudate is provided, but an extrudate of a single material, without essential composition differences throughout the cross-section of the extrude (i.e. "normal" 3D printing with a single nozzle). A way to accomplish this may be to stop feeding material to a core part or to a shell part of the printer head, by which from the nozzle as extrudate only a single material may escape and be deposited (see further also below).

Note that the term "core-shell" may in specific embodiments also indicate a core-shell with a plurality of different shells. For the further explanation of the invention, however, here below essentially only core-shell extrudate or core-shell layer parts are discussed consisting of a core and a shell.

To provide a core-shell material, a (printer head with a) core-shell nozzle may be applied, as known in the art.

Hence, during at least part of the 3D printing stage the extrudate comprises a core-shell extrudate. The core-shell extrudate comprises a core comprising a core material, and a shell comprising a shell material. As will be further discussed below, in embodiments it may be possible to control the relative contributions to the extrudate. In this way, physical (and/or chemical) properties may further be tuned. Essentially, it may be possible to vary essentially everything between (i) only a first thermoplastic material, which will then escape from the nozzle as 3D printable material essentially only comprising the first thermoplastic material as thermoplastic material, (ii) a core-shell material with the first thermoplastic material and a second thermoplastic material, wherein one is chosen as core and the other as shell, and (iii) only the second thermoplastic material, which will then escape from the nozzle as 3D printable material, essentially only comprising the second thermoplastic material as thermoplastic material.

Therefore, in specific embodiments the core material and the shell material comprise different thermoplastic materials. In embodiments, the first thermoplastic material may be an elastomeric material having (ia) a first low glass transition temperature T_{LG1} of at maximum -20 °C, and (ib) a first high glass transition temperature T_{HG1} or a first high melting temperature T_{HM1} of at minimum at 80 °C. Alternatively or additionally, the second thermoplastic material may have one or more of a second glass transition temperature T_{G2} and a second melting temperature T_{M2} of at minimum 80 °C. Therefore, in yet further specific embodiments, the different thermoplastic materials are selected from the group consisting of (i) a first thermoplastic material being an elastomeric material having (ia) a first low glass transition temperature T_{LG1} at maximum -20 °C, and (ib) a first high glass transition temperature T_{HG1} or a first high melting temperature T_{HM1} of at minimum at 80 °C, and (ii) a second thermoplastic material having one or more of a second glass transition temperature T_{G2} and a second melting temperature T_{M2} of at minimum 80 °C.

The phrase "first thermoplastic material being an elastomeric material having (ia) a first low glass transition temperature T_{LG1}" indicates that the first thermoplastic material has either a glass transition temperature or melting. Whether this elastomer has a glass transition temperature or melting temperature, this glass transition temperature or melting temperature is relatively low, of at maximum 0 °C, such as at maximum -20 °C, such as in the range of -100-0 °C (i.e minus 100 to 0 °C). The phrase "and (ib) a first high glass transition temperature T_{HG1} or a first high melting temperature T_{HM1} of at minimum at 60 °C" indicates that in addition to the low or first glass transition temperature or low or first melting temperature, this elastomer also has a second or high glass transition temperature or second or high melting temperature, of at minimum 60 °C. The phrase "second thermoplastic material having one or more of a second glass transition temperature T_{G2} and a second melting temperature T_{M2}" indicates that the second thermoplastic material has either a glass transition temperature or a melting temperature, or in embodiments both, but this temperature or these temperature are at minimum 60 °C, such as at least 80 °C, like up to 300 °C, like up to 250 °C, such as in the range of 60-250 °C.

The elastomeric material can be used to reduce stress and the thermoplastic material with high glass transition temperature may especially provide a (more) stiff structure.

An elastomer may be defined as a high molar mass material which when deformed at room temperature reverts quickly to nearly original size and form when the load causing the deformation has been removed (ISO 1382:1996). Further, a thermoplastic elastomer may be defined as a rubber-like material which need not be vulcanized. The rubbery character disappears at the processing temperature but returns when the material has reached the operating temperature.

The first thermoplastic material, i.e. the thermoplastic elastomer is a copolymer which hard and soft segments. Upon cooling the material hard segments form crystalline and/or glassy regions whereas soft segments are above their glass transition and/or melting temperature. For this reason, the first thermoplastic material has especially two transition temperatures, such as a low and high glass transition temperature or a low and high melting temperature. The first thermoplastic material may also have a low glass transition temperature and a high melting temperature.

The first thermoplastic elastomeric material has a Young's modulus in the range of 2 to 200 MPa, such as 30 MPa, and it may e.g. have one or more of the following properties: tensile strength 2-35 MPa, such as 3-30 MPa; break at elongation 50-1000 %; Hardness Shore A 20-100, such as 25-95. Further, the first thermoplastic material has a lower glass transition of at maximum about 0 °C, such as selected from the range of -100-0 °C (i.e minus 100 to 0 °C). Yet further, the elastomer has a higher glass transition temperature and/or a melting temperature of at minimum 60°C, in the range e.g. 60-300°C.

The second thermoplastic material has a Young's modulus in the range of 1 to 10 GPa, such as 2 GPa, and it may e.g. have one or more of the following properties: tensile strength at least 30 MPa, such as at least 35 MPa, like in the range of 50-200 MPa; break at elongation about 100 %; Hardness Shore D of at least 50, such as 25-95. Further, the second thermoplastic material has a glass transition temperature and/or a melting temperature of at minimum about 60 °C, such as selected from the range of 60-250 °C.

The tensile strength may be evaluated according to ASTM 638, the elongation at break may be determined based on ASTM 638, the hardness shore A and the hardness shore D may be evaluated according to ASTM D2240.

Especially, the first thermoplastic material and the second thermoplastic material differ in one or more of the afore-mentioned properties. The Young's modulus of the first thermoplastic material may be smaller than of the second thermoplastic material, such as at least 800 MPa smaller. The lower glass transition temperature of the first thermoplastic material is smaller than the glass transition temperature and/or melting temperature of the second thermoplastic material, such as especially at least 40 °C smaller, even more especially at least 60 °C smaller, such as at least 80 °C smaller than of the second thermoplastic material. The elongation at break of the first thermoplastic material may be larger than of the second thermoplastic material (before necking), such as at least 20% pp, like at least 50% pp, though this is not necessarily the case.

As already indicated above, in embodiments the method may further comprise controlling the relative amounts of the first thermoplastic material and the second thermoplastic material during the 3D printing stage. This may imply an essentially complete (stepless) variation between the first thermoplastic material and the second thermoplastic material. Hence, in embodiments the method may further comprise controlling the relative amounts of the core material and the shell material during the 3D printing stage. Note that when only core material is provided, the extrudate will only be core material, essentially homogeneously distributed over the cross-section (i.e. no core-shell geometry). Likewise, when only shell material is provided, the extrudate will only be shell material, essentially homogeneously distributed over the cross-section (i.e. no core-shell geometry).

In this way the desired properties from the respective thermoplastic materials can be chosen at those parts of the 3D printed item where desired. Further, it may allow the generation of elastic parts between more rigid parts. Design freedom is increased.

Hence, in embodiments the presently proposed method may e.g. be used to locally tune the physical properties of the 3D printed item. Therefore, in embodiments the method may further comprise providing during one or more time periods of the 3D printing stage the core-shell extrudate and providing during one or more other time periods of the 3D printing stage extrudate comprising one of the first thermoplastic material and the second thermoplastic material.

However, it also appears that compared to 3D items that essentially consist of the second thermoplastic material, the same 3D item wherein the second thermoplastic material is chosen as shell material, and the first thermoplastic material is chosen as core material, the 3D item may have in terms of strength essentially the same physical properties, whereas internal stress is (substantially) reduced. The internal stress may further be reduced by using the second thermoplastic material as core material and the first thermoplastic material as shell material. In those embodiments, the physical properties of the 3D item, at least at the position where such core-shell 3D printed material is applied (3D printed material was applied), may also change. Dependent upon the desired application, this may be desired.

Therefore, in embodiments during one or more time periods of the 3D printing stage the core material may comprise the first thermoplastic material having (ia) a first low glass transition temperature T_{LG1} of at maximum 0 °C, and (ib) a first high glass transition temperature T_{HG1} or a first high melting temperature T_{HM1} of at minimum at 60 °C. Alternatively or additionally, during one or more (other) time periods of the 3D printing stage the core material may comprise the second thermoplastic material having one or more of a second glass transition temperature T_{G2} and a second melting temperature T_{M2} of at minimum 60 °C.

As indicated above, one of the thermoplastic materials especially comprises an elastomeric thermoplastic material. Best results may be obtained with relative low lower glass and/or melting temperatures, such as at maximum about 0 °C. With respect to the more rigid thermoplast, especially the glass temperature and/or melting temperature is relatively high, such as at least about 80 °C, such as at least about 100 °C at least 250 °C. Therefore, in embodiments the first thermoplastic material has a first low glass transition temperature T_{LG1} of at maximum 0 °C and the second thermoplastic material has one or more of a second glass transition temperature T_{G2} and a second melting temperature T_{M2} of at minimum 80 °C.

As indicated above, each of the first and the second thermoplast may be a blend of different thermoplasts.

The thermoplastic elastomer may in embodiments comprise a block copolymer, such as one or more of a diblock or triblock copolymer. In specific embodiments, the thermoplastic elastomer comprises soft phase (soft segments) and hard phases (hard segments). The former may have a glass temperature of -20 °C or lower, such as -30 °C or lower, like selected from the range of -100 - -20 °C. The hard phases may have a glass transition temperature and/or a melting temperature of at least 30 °C, such as at least 40 °C, like selected from the range of 50-250 °C.

Hence, in embodiments the second thermoplastic material may especially be selected from the group consisting of a styrenic block copolymer, a thermoplastic polyolefin elastomer, a thermoplastic polyurethane, a thermoplastic copolyester, and a thermoplastic polyamide elastomer. For instance, in embodiments the second thermoplastic material may be selected from the group consisting of a polyurethane elastomer, polyester elastomer, polyamide elastomer, polyethylene-poly(-olefin), polypropylene/poly(ethylene-propylene), poly(etherimide)-polysiloxane, polypropylene/hydrocarbon rubber, polypropylene/nitrile rubber, pVC-(nitrile rubber+DOp), polypropylene/poly(butylacrylate), and polyamide or polyester/silicone rubber.

The second thermoplastic material may in embodiments especially comprise an essentially amorphous polymer. Such polymers may also be indicated as "glassy polymers". Alternatively, or additionally, the second thermoplastic material may in embodiments especially comprise an essentially semi-crystalline polymer. Suitable materials may e.g. be selected from the group consisting of polycarbonate (PC), polysulfone (PSU), polyphenylene sulfide (PPS), polybutylene terephthalate (PBT), crystalline polyethylene terephthalate (PET), polyethylene naphthalate (PEN), polyether ether ketone (PEEK), and acrylonitrile butadiene styrene (ABS), PMMA, polystyrene, polypropylene, and polyamide. Glass transition can be determined using differential scanning calorimetry (DSC) where glass transition appears as a step in heat vs temperature curve. In the same way, DSC can be used to determine the melting temperature which appears as an endothermic peak. Glass transition temperature can also be determined using dynamic mechanical thermal analyzer. Glass transition appear as a peak in the loss tangent curve.

As indicated above, in embodiments the core comprises an elastomer, and the shell comprises a more rigid thermoplast. Therefore, in specific embodiments the shell material may comprise one or more of polycarbonate (PC), polysulfone (PSU), polyphenylene sulfide (PPS), polybutylene terephthalate (PBT), crystalline polyethylene terephthalate (PET), polyethylene naphthalate (PEN), polyether ether ketone (PEEK), and acrylonitrile butadiene styrene (ABS). Alternatively, or additionally in embodiments the core material comprises a block copolymer), PMMA, polystyrene, polypropylene, and polyamide. Especially, in embodiments the core material comprises one or more of a styrenic block copolymer, a thermoplastic polyolefin elastomer, a thermoplastic polyurethane elastomer, a thermoplastic copolyester elastomer, and a thermoplastic polyamide elastomer.

In specific embodiments, essentially all polymeric material from the core material comprises the first thermoplastic material. Yet further, especially essentially all polymeric material from the shell material comprises the second thermoplastic material.

Alternatively, however, in specific embodiments, essentially all polymeric material from the core material comprises the second thermoplastic material. Yet further, especially essentially all polymeric material from the shell material comprises the first thermoplastic material.

In another aspect, the invention provides a method comprising 3D printing a 3D item ("item") by means of fused deposition modelling (or "fused deposition modelling printing"), the method comprising a 3D printing stage comprising layer-wise depositing an extrudate comprising 3D printable material to provide the 3D item comprising 3D printed material, wherein during at least part of the 3D printing stage the extrudate comprises a core-shell extrudate comprising a core comprising a fluid core material, and a shell comprising a shell material, wherein the shell material comprises a thermoplastic material selected from the group consisting of (i) a first thermoplastic material being an elastomeric material having (ia) a first low glass transition temperature T_{LG1} or a first low melting temperature T_{LM1} of at maximum 0 °C, and (ib) a first high glass transition temperature T_{HG1} or a first high melting temperature T_{HM1} of at minimum at 60 °C, and (ii) a second thermoplastic material having one or more of a second glass transition temperature T_{G2} and a second melting temperature T_{M2} of at minimum 60 °C, especially wherein the shell material comprises the (second) thermoplastic material having one or more of a second glass transition temperature T_{G2} and a second melting temperature T_{M2} of at minimum 60 °C.

Further, in specific embodiments the fluid core material may comprise one or more of a liquid (at room temperature), such as water, and a gas, such as air. Especially, the fluid core material may comprise air. Hence, in yet a further aspect the invention also provides the use of core-shell 3D printing and/or the use of core-shell filaments for 3D printing a 3D item with a reduced stress. The invention also provides the use of core-shell 3D printing and/or the use of core-shell filaments for 3D printing a 3D item in a more reliable way. The invention also provides the use of core-shell 3D printing and/or the use of core-shell filaments for 3D printing a 3D item with locally a reduced stress. The invention also provides the use of core-shell 3D printing and/or the use of core-shell filaments for 3D printing a 3D item with spatial differences in elastomeric behavior.

Hence, amongst others the invention provides a stress releasing object by multiple-material FDM printing.

The herein described method provides 3D printed items. Hence, the invention also provides in a further aspect a 3D printed item obtainable with the herein described method. Especially, the invention provides a 3D item comprising 3D printed material wherein the 3D item comprises a plurality of layers of 3D printed material, wherein the plurality of layers comprises one or more core-shell layer parts, wherein each of the core-shell layer parts comprises a core comprising a core material, and a shell comprising a shell material, wherein the core material comprises a first thermoplastic material and the shell material comprises a second thermoplastic material different from the first thermoplastic material, or the core material comprises the second thermoplastic material and the shell material comprises the first thermoplastic material, wherein the first thermoplastic material is an elastomeric material having a Young's modulus in the range of 2 to 200 MPa, a first low glass transition temperature T_{LG1}, and a first high glass transition temperature T_{HG1} or a first high melting temperature T_{HM1} of at minimum at 60 °C, and wherein the second thermoplastic material has a Young's modulus in the range of 1 to 10 GPa, and one or more of a second glass transition temperature T_{G2} and a second melting temperature T_{M2} of at minimum 60 °C.

Herein, the term "core-shell layer part" is used. This reflects the fact that in embodiments all layers may be core-shell layers, in embodiments part of the total number of layers may be core-shell layers, and in embodiments a part of a layer (or parts of layers) may be of the core-shell type. As indicated above, in embodiments the whole weight ratio range between only first thermoplast and only second thermoplast may in embodiments be accessible. This may allow to create core-shell layer parts at a position where desired. Such part may be configured between layers that have essentially only a single material essentially homogeneously distributed over the cross-section. The core-shell layer part may have a length of less than 1 mm to a few mm, or much longer. The thickness and height may essentially be the same as a possible adjacent non-core-shell layer (part), as the same nozzle may be used to provide core-shell layer (parts) and non-core shell layer parts.

Some specific embodiments in relation to the 3D printed item have already been elucidated below when discussing the method. Below, some specific embodiments in relation to the 3D printed item are discussed in more detail.

As can be derived from the above, in embodiments the relative amounts of the first thermoplastic material and the second thermoplastic material vary over a length (L3) of one or more of the one or more core-shell layer parts. Of course, such embodiments may not be necessarily present in the 3D item. However, such embodiments allow a smooth transition from a 3D printed material of one type to a core-shell layer part. Hence, when introducing such layer parts, one may use a gradient of the materials from one to the core-shell combination, and e.g. back to the first material. For instance, a layer of polycarbonate or PMMA may include a layer part of elastomeric block-copolymer.

Hence, as will be clear from the above the plurality of layers may comprise one or more layer parts comprising one of the first thermoplastic material and the second thermoplastic material, like in the afore-mentioned example of a layer of polycarbonate or PMMA may include a layer part of elastomeric block-copolymer.

Like in relation to the embodiments of the method, also in embodiments of the 3D printed item the core material of one or more of the one or more core-shell layer parts may comprise the first thermoplastic material having (ia) a first low glass transition temperature T_{LG1} or a first low melting temperature T_{LM1} of at maximum 0 °C, and (ib) a first high glass transition temperature T_{IIG1} or a first high melting temperature T_{IIM1} of at minimum at 60 °C, and the shell material of one or more of the one or more core-shell layer parts may comprise the second thermoplastic material having one or more of a second glass transition temperature T_{G2} and a second melting temperature T_{M2} of at minimum 60 °C. Alternatively or additionally, the core material of one or more of the one or more core-shell layer parts may comprise the second thermoplastic material having one or more of a second glass transition temperature T_{G2} and a second melting temperature T_{M2} of at minimum 60 °C, and the shell material of one or more of the one or more core-shell layer parts may comprise the first thermoplastic material (ia) a first low glass transition temperature T_{LG1} or a first low melting temperature T_{LM1} of at maximum 0 °C, and (ib) a first high glass transition temperature T_{HG1} or a first high melting temperature T_{HM1} of at minimum at 60 °C.

In specific embodiments, the first thermoplastic material has a first low glass transition temperature T_{LG1} of at maximum -80 °C and the second thermoplastic material has a second glass transition temperature T_{G2} of at minimum 180 °C.

Further, in specific embodiments wherein the shell material comprises one or more of polycarbonate (PC), polysulfone (PSU), polyphenylene sulfide (PPS), polybutylene terephthalate (PBT), crystalline polyethylene terephthalate (PET), polyethylene naphthalate (PEN), polyether ether ketone (PEEK), and acrylonitrile butadiene styrene (ABS) ), PMMA, polystyrene, polypropylene, and polyamide. In further specific embodiments, the core material may comprise a block copolymer. In yet further specific embodiments, the core material may comprise one or more of a styrenic block copolymers, a thermoplastic polyolefin elastomer, a thermoplastic polyurethane elastomer, a thermoplastic copolyester elastomer, and a thermoplastic polyamide elastomer. Note however that in other embodiments, the core material and the shell material may comprise the second thermoplastic material and the first thermoplastic material, respectively.

In specific embodiments, essentially all polymeric material from the core material comprises the first thermoplastic material. Yet further, especially essentially all polymeric material from the shell material comprises the second thermoplastic material. Alternatively, however, in specific embodiments, essentially all polymeric material from the core material comprises the second thermoplastic material. Yet further, especially essentially all polymeric material from the shell material comprises the first thermoplastic material.

When e.g. an elastomeric material is used in the shell and a glassy or semi-crystalline material is used in the core, structures with anisotropic mechanical properties can be produced. In such 3D printed items in the direction of the layers the 3D printed item may behave like the glassy/crystalline polymer and may have a relatively high modulus. In the direction perpendicular to the layers the 3D printed item may have the properties of an elastomer and may have a relatively low modulus and may be bent or stretched.

The (with the herein described method) obtained 3D printed item may be functional *per se.* For instance, the 3D printed item may be a lens, a collimator, a reflector, etc.. The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light source (like a LED), etc. The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc.. Alternatively, or additionally, the functional component may comprise a thermal component (e.g. configured to cool or to heat an electrical component). Hence, the functional component may be configured to generate heat or to scavenge heat, etc..

In yet a further aspect, the invention provides a lighting system comprising (a) a light source, especially configured to provide (visible) light source light, and (b) the 3D item as defined herein, wherein 3D item is configured as one or more of (i) at least part of a housing and a functional component, wherein the functional component is selected from the group consisting of an optical component, a support, an electrically insulating component, and a thermally conductive component.

Returning to the 3D printing process, a specific 3D printer may be used to provide the 3D printed item described herein. Therefore, in yet a further aspect the invention also provides a fused deposition modeling 3D printer, comprising (a) a printer head comprising a printer nozzle, and (b) a 3D printable material providing device configured to provide 3D printable material to the printer head, wherein the fused deposition modeling 3D printer is configured to provide said 3D printable material according to the herein describe method(s). Further, such 3D printer especially comprises a core-shell nozzle.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate, according to the herein describe method(s). Further, such 3D printer especially comprises a core-shell nozzle.

Different 3D printable materials may be fed to the printer head, such as in the form of filaments, though other options may also be possible, wherein one feed may comprise the first thermoplastic material and another feed may comprise the second thermoplastic material.

Especially, the 3D printer comprises a controller (or is functionally coupled to a controller) that is configured to execute in a controlling mode (or "operation mode") the method as described herein.

The system, or apparatus, or device may execute an action in a "mode" or "operation mode" or "mode of operation". Likewise, in a method an action or stage, or step may be executed in a "mode" or "operation mode" or "mode of operation". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Figs. 2a-2d schematically depict some aspects; and
Fig. 3 schematically depicts an aspect of the invention.

The schematic drawings are not necessarily to scale.

### DETAILED DESCRIPTION OF THE EMBODIMENTS

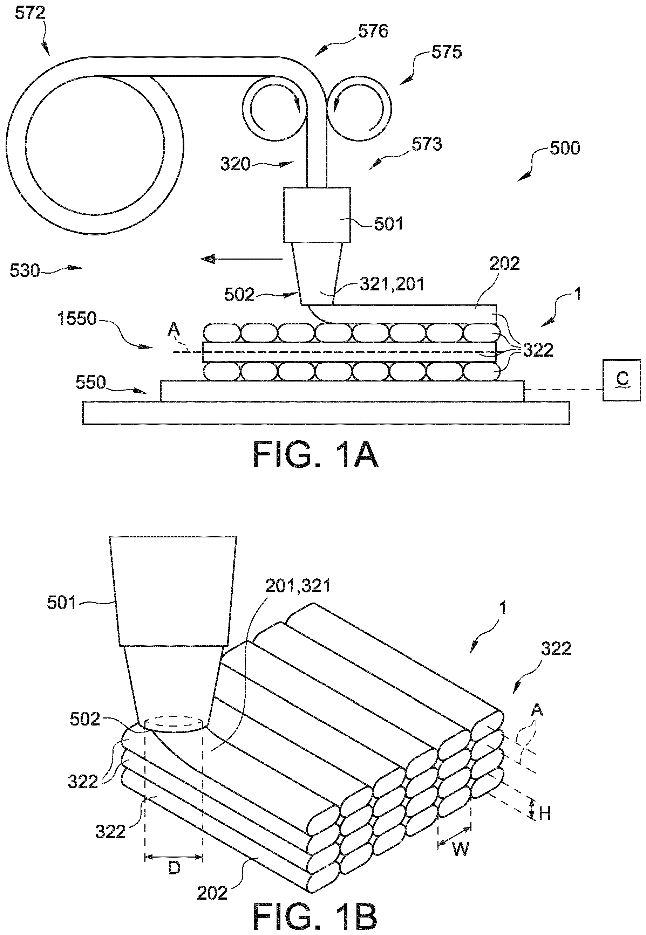

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads, though other embodiments are also possible. Reference 502 indicates a printer nozzle. The 3D printer of the present invention may especially include a plurality of printer nozzles, though other embodiments are also possible. Reference 321 indicates a filament of printable 3D printable material (such as indicated above). For the sake of clarity, not all features of the 3D printer have been depicted, only those that are of especial relevance for the present invention (see further also below).

The 3D printer 500 is configured to generate a 3D item 1 by layer-wise depositing on a receiver item 550, which may in embodiments at least temporarily be cooled, a plurality of filaments 321 wherein each filament 310 comprises 3D printable material 201, such as having a melting point Tₘ. The 3D printable material 201 may be deposited on a substrate 1550 (during the printing stage).

The 3D printer 500 is configured to heat the filament material upstream of the printer nozzle 502. This may e.g. be done with a device comprising one or more of an extrusion and/or heating function. Such device is indicated with reference 573 and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in a filament 321 downstream of the printer nozzle which becomes a layer 322 on the receiver item or on already deposited printed material. In general, the diameter of the filament 321 downstream of the nozzle is reduced relative to the diameter of the filament 322 upstream of the printer head. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference A indicates a longitudinal axis or filament axis.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively, or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may in embodiments be the case. Reference H indicates the height of a layer. Layers are indicated with reference 203. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202. Directly downstream of the nozzle 502, the filament 321 with 3D printable material becomes, when deposited, layer 322 with 3D printed material 202.

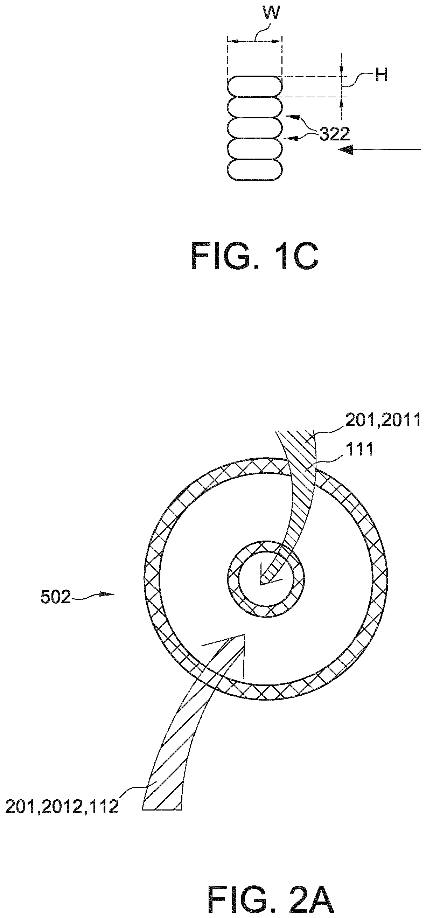

Fig. 1c schematically depicts a stack of 3D printed layers 322, each having a layer height H and a layer width W. Note that in embodiments the layer width and/or layer height may differ for two or more layers 322.

Referring to Figs. 1a-1c, the filament of 3D printable material that is deposited leads to a layer having a height H (and width W). Depositing layer 322 after layer 322, the 3D item 1 is generated.

Figs. 1a-1c show embodiments of amongst the method in general. Figs. 2a-2d schematically depict some aspects in more detail, wherein the core-shell 3D printing is further schematically elucidated.

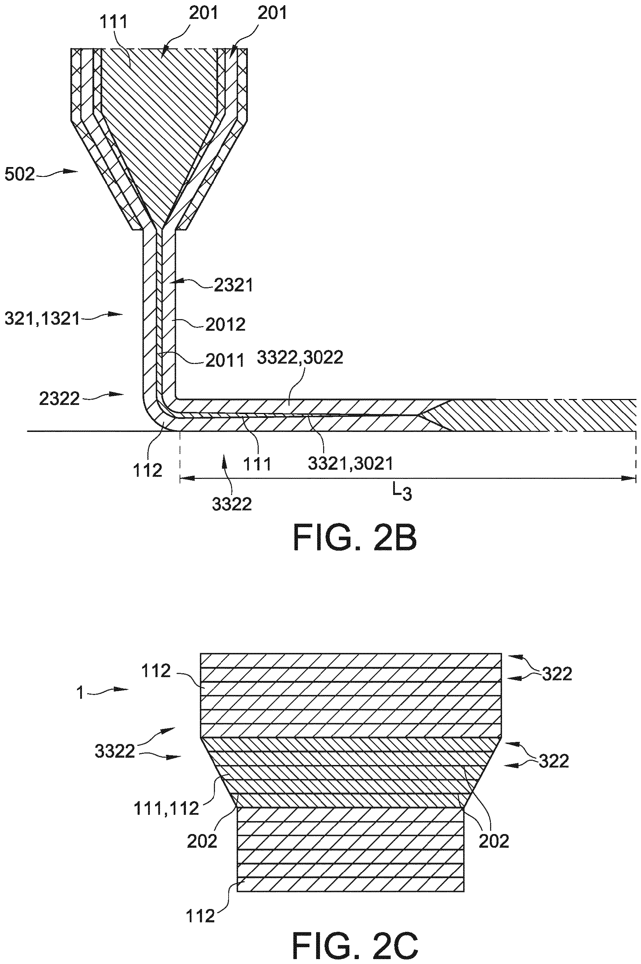

A core-shell nozzle 502 may be applied, see Figs. 2a-2b, wherein different 3D printable materials 201 may be introduced, to provide the 3D item 1 comprising 3D printed material 202, see Fig. 2c. As schematically depicted in Fig. 2b, during at least part of the 3D printing stage the extrudate 321 comprises a core-shell extrudate 1321 comprising a core 2321 comprising a core material 2011, and a shell 2322 comprising a shell material 2012, wherein the core material 2011 and the shell material 2012 comprise different thermoplastic materials selected from the group consisting of a first thermoplastic material 111 being an elastomeric material (having a first glass transition temperature Tg1 of at maximum 0 °C) and a second thermoplastic material 112 (having a second glass transition temperature Tg2 of at minimum 60 °C).

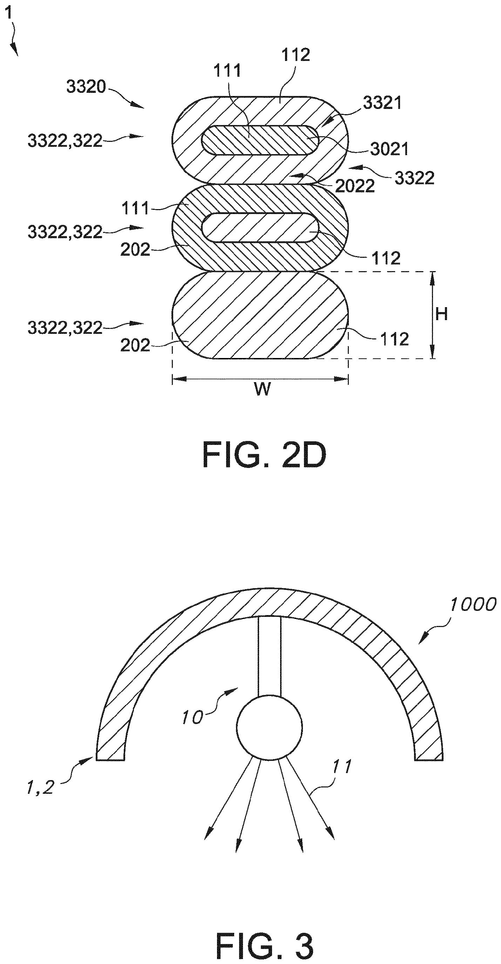

Fig. 2b-2c very schematically depict that in embodiments the method may further comprise controlling the relative amounts of the first thermoplastic material 111 and the second thermoplastic material 112 during the 3D printing stage. In fig. 2b the core material 2011 downstream from the nozzle comprises the first thermoplastic material 111. From right to left, it appears that 3D printing was started with only the first thermoplastic material. Thereafter, only the second thermoplastic material was deposited. Since then, the core-shell extrudate 1321 was provided and deposited as core-shell 3D printed material 202. Hence, the method may further comprise providing during one or more time periods of the 3D printing stage the core-shell extrudate 1321 and providing during one or more other time periods of the 3D printing stage extrudate comprising one of the first thermoplastic material 111 and the second thermoplastic material 112. Fig. 2c schematically depicts some layers 202 of the second thermoplastic material 112, some core-shell layers 3322 with both the first thermoplastic material 111 and the second thermoplastic material, wherein one is comprised by the core and the other is comprised by the shell, and again some layers 202 of the second thermoplastic material 112. Fig. 2d schematically depict a lowest layer 202 of the second thermoplastic material 112, a two core-shell layers 3322 with both the first thermoplastic material 111 and the second thermoplastic material, wherein one is comprised by the core and the other is comprised by the shell. In the middle core-shell layer 3322 the first thermoplastic material 111 is comprised by the shell 2322 and the second thermoplastic material is comprised by the core 2321. In the top core-shell layer 3322 the first thermoplastic material 111 is comprised by the core 2321 and the second thermoplastic material is comprised by the shell 2322. Note such different that core-shell extrudates 2321 (top layer and middle layer in Fig. 2d) can only be generated with either two different nozzles or when the feed to the printer head is swapped, such that the core part receives the second thermoplastic material 112 and the shell part receives the first thermoplastic material 111 (unlike presently drawn in Figs. 2a-2b). In this sense, the three different layers 322 as schematically depicted in Fig. 2d are especially depicted to show that different types of layers can be made (see also Fig. 2c).

Hence, during one or more time periods of the 3D printing stage the core material 2011 comprises the first thermoplastic material 111 having the first glass transition temperature Tg1 of at maximum 0 °C and wherein the shell material 2012 comprises the second thermoplastic material having the second glass transition temperature Tg2 of at minimum 60 °C, and/or during one or more time periods of the 3D printing stage the core material 2011 comprises the second thermoplastic material having the second glass transition temperature Tg2 of at minimum 60 °C, and wherein the shell material 2012 comprises the first thermoplastic material 111 having the first glass transition temperature Tg1 of at maximum 0 °C

Figs. 2c and 2d also schematically depict embodiments of a 3D item 1 comprising 3D printed material 202 wherein the 3D item 1 comprises a plurality of layers 322 of 3D printed material 202, wherein the plurality of layers 322 comprises one or more core-shell layer parts 3322, wherein each of the core-shell layer parts 3322 comprises a core 3321 comprising a core material 3021, and a shell 3322 comprising a shell material 3022, wherein the core material 3021 and the shell material 3022 comprise different thermoplastic materials selected from the group consisting of a first thermoplastic material 111 being an elastomeric material (having a first glass transition temperature Tg1 of at maximum 0 °C) and a second thermoplastic material 112 (having a second glass transition temperature Tg2 of at minimum 60 °C).

As shown in Fig. 2b, the relative amounts of the first thermoplastic material 111 and the second thermoplastic material 112 vary over a length L3 of one or more of the one or more core-shell layer parts 3322. This length L3 may be part of the layer or may be the entire layer. Further, as shown in Figs. (2b), 2c and 2d, the plurality of layers 322 comprise one or more layer parts 3320 comprising one of the first thermoplastic material 111 and the second thermoplastic material 112.

Fig. 3 schematically depicts an embodiment of a lamp or luminaire, indicated with reference 2, which comprises a light source 10 for generating light 11. The lamp may comprise a housing or shade or other element, which may comprise or be the 3D printed item 1. The possible transmissivity of the material may provide additional optical effects and appearance (in the off state of the lamp or luminaire) may appear mat.

Typically, the product is printed in one go, which means the core material is one long fiber which is embedded in a shell matrix. Importantly, there is connection for the shell parts, and no connection between the core parts at the side view. Hence, disconnection of polycarbonate parts by a shell, or vice versa filling in a polycarbonate shell with a different material results in different mechanical properties.

A number of examples were generated, of which some are further described below. As starting point for stress calculation, polycarbonate (PC) wire was used as the reference. PC was used, as core material and as shell material PC (in fact not really core-shell, as the core and the shell are identical), which results in a cylindrical object with maximum stress level of 26 MPa.

A cylindrical body was calculated with PC as the core material, and a rubber elastomer as the shell material. By printing in this configuration, the PC parts are disconnected from the side view (similar to the middle core-shell layer 3322 in Fig. 2d), and an object is realized by connection of these PC parts by the elastomeric shell. A PC core and PC shell with width of 1200 µm and a layer thickness of 800 µm were generated. Here, the rubbery part is playing a role as a stress release agent, resulting in reduction of the stress by a factor of >97% compared to a PC part made in the same way. As indicated above, with a single core-shell nozzle, either variations between the lower and the middle layer 322 or variations between the upper and lower layer 322 may be possible.

Further, a cylindrical body was calculated with PC as the shell material, and air as the core material. By printing in this configuration, the object is realized by connection of the PC parts with air funnel/tube. Compared to a complete filled PC part, the stress is reduced by 13% using this configuration with air gaps (22.7 MPa). Here, likely the air part is playing a role as a stress release agent. The PC layer which is printed on top of each layer, can be readjusted more easily, deform more, so that the PC can relax more, resulting in a lower amount of maximum stress. The layers were made with a width of 1200 µm and a layer thickness of 800 µm, with PC as shell and air as the core; i.e. with essentially the same dimensions as the reference.

Yet further, a cylindrical body was calculated with PC as the shell material, and copolyester based elastomer as the core material. By printing in this configuration, the is realized by connection of the PC parts with rubber parts in the center. Compared to a complete filled PC part the stress is reduced by 23% using this configuration with air gaps (20 MPa). Here, likely the flexible elastomeric part is playing a role as a stress release agent. The PC layer which is printed on top of each layer, can be readjusted more easily, deform more, so that the PC can relax more, resulting in a lower amount of maximum stress. The layers were made with a width of 1200 µm and a layer thickness of 800 µm, with PC as shell and air as the core; i.e. with essentially the same dimensions as the reference.

It is of interest to note that there is less stress reduction for hollow than for elastomeric core: reduction for hollow PC wire compared to Rubber filled wire: 13% vs. 23%. Calculations show that hollow wire is deformed more, hence leading to higher local stresses.

A plurality of objects were made, wherein those with an elastomeric core and a high Tg shell had a much better shape conservation than the only high Tg printed layers (e.g. both core and shell PC, polysulfone).

As indicated above, the present invention may include core-shell 3D printing and non-core shell 3D printing, for e.g. applying core-shell printing at certain local positions of an object where stresses are (expected to be) highest. FDM printing is suited for this purpose. FDM can tune on demand where the materials are deposited, and hence, we are able to deposit at the most critical positions the elastomeric core part, while at other positions, we print the PC material which is present for application requirements. Alternatively, the core may thus comprise a thermoplastic material (PC), and the shell may be made from an elastomer. By printing with a core-shell nozzle the resulting printed object will be more flexible. This also results in lower stress levels during deformation as well as lower residual stress. Here the functionality of combining flexible parts and stiff parts, together with areas in which stress levels can be minimized.

Hence, amongst others - in embodiments - the invention provides a new way of FDM printing aiming to reduce stresses in a 3D printed object. For this purpose, in embodiments a core-shell nozzle is used which deposits an elastomer core with a thermoplastic material (i.e. polycarbonate) as a shell. In such embodiments, the outside may e.g. remain PC like, and hence main properties remain like the thermoplastic material. During printing the inside elastic material gives flexibility to the deposition by which the stresses are reduced.

The term "substantially" herein, such as "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" refers "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention also provides a control system that may control the apparatus or device or system, or that may execute the herein described method or process. Yet further, the invention also provides a computer program product, when running on a computer which is functionally coupled to or comprised by the apparatus or device or system, controls one or more controllable elements of such apparatus or device or system.

The invention further applies to a device comprising one or more of the characterizing features described in the description and/or shown in the attached drawings. The invention further pertains to a method or process comprising one or more of the characterizing features described in the description and/or shown in the attached drawings.

It goes without saying that one or more of the first (printable or printed) material and second (printable or printed) material may contain fillers such as glass and fibers which do not have (to have) influence on the on T_{g} or Tₘ of the material(s).

## Claims

1. A method comprising 3D printing a 3D item (1) by means of fused deposition modelling, the method comprising a 3D printing stage comprising layer-wise depositing an extrudate (321) comprising 3D printable material (201) to provide the 3D item (1) comprising 3D printed material (202), wherein during at least part of the 3D printing stage the extrudate (321) comprises a core-shell extrudate (1321) comprising a core (2321) comprising a core material (2011), and a shell (2322) comprising a shell material (2012), wherein the core material (2011) comprises a first thermoplastic material (111) and the shell material (2012) comprises a second thermoplastic material (112) different from the first thermoplastic material (111), or the core material (2011) comprises the second thermoplastic material (112) and the shell material (2012) comprises the first thermoplastic material (111),
**characterised in that**
the first thermoplastic material (111) is an elastomeric material having a Young's modulus in the range of 2 to 200 MPa, a first low glass transition temperature T_{LG1} of at maximum 0 °C, and a first high glass transition temperature T_{HG1} or a first high melting temperature T_{HM1} of at minimum at 60 °C, and wherein the second thermoplastic material (112) has a Young's modulus in the range of 1 to 10 GPa, and one or more of a second glass transition temperature T_{G2} and a second melting temperature T_{M2} of at minimum 60 °C, wherein Young's moduli are measured according to ASTM 638.

2. The method according to claim 1, further comprising controlling the relative amounts of the first thermoplastic material (111) and the second thermoplastic material (112) during the 3D printing stage.

3. The method according to any one of the preceding claims, further comprising providing during one or more time periods of the 3D printing stage the core-shell extrudate (1321) and providing during one or more other time periods of the 3D printing stage extrudate comprising one of the first thermoplastic material (111) and the second thermoplastic material (112).

4. The method according to any one of the preceding claims, wherein during one or more time periods of the 3D printing stage the core material (2011) comprises the first thermoplastic material (111) and the shell material (2012) comprises the second thermoplastic material (112).

5. The method according to any one of the preceding claims, wherein during one or more time periods of the 3D printing stage the core material (2011) comprises the second thermoplastic material (112) and the shell material (2012) comprises the first thermoplastic material (111).

6. The method according to any one of the preceding claims, wherein (i) the first thermoplastic material has (ia) the first low glass transition temperature T_{LG1} of at maximum -20 °C, and (ib) the first high glass transition temperature T_{HG1} or the first high melting temperature T_{HM1} of at minimum at 80 °C, and (ii) the second thermoplastic material (112) has one or more of the second glass transition temperature T_{G2} and the second melting temperature T_{M2} of at minimum 80 °C.

7. The method according to any one of the preceding claims, wherein the shell material (2012) comprises one or more of polycarbonate (PC), polysulfone (PSU), polyphenylene sulfide (PPS), polybutylene terephthalate (PBT), crystalline polyethylene terephthalate (PET), polyethylene naphthalate (PEN), polyether ether ketone (PEEK), and acrylonitrile butadiene styrene (ABS) ), PMMA, polystyrene, polypropylene, polyamide, and wherein the core material (2011) comprises one or more of a styrenic block copolymers, a thermoplastic polyolefin elastomer, a thermoplastic polyurethane elastomer, a thermoplastic copolyester elastomer, and a thermoplastic polyamide elastomer.

8. A 3D item (1) comprising 3D printed material (202) wherein the 3D item (1) comprises a plurality of layers (322) of 3D printed material (202), wherein the plurality of layers (322) comprises one or more core-shell layer parts (3322), wherein each of the core-shell layer parts (3322) comprises a core (3321) comprising a core material (3021), and a shell (3322) comprising a shell material (3022), wherein the core material (3021) comprises a first thermoplastic material (111) and the shell material (3022) comprises a second thermoplastic material (112) different from the first thermoplastic material (111), or the core material (3021) comprises the second thermoplastic material (112) and the shell material (3022) comprises the first thermoplastic material (111), **characterised in that** the first thermoplastic material (111) is an elastomeric material having a Young's modulus in the range of 2 to 200 MPa, a first low glass transition temperature T_{LG1} of at maximum 0 °C, and a first high glass transition temperature T_{HG1} or a first high melting temperature T_{HM1} of at minimum at 60 °C, and wherein the second thermoplastic material (112) has a Young's modulus in the range of 1 to 10 GPa, and one or more of a second glass transition temperature T_{G2} and a second melting temperature T_{M2} of at minimum 60 °C, wherein Young's moduli are measured according tc ASTM 638.

9. The 3D item (1) according to claim 8, wherein the relative amounts of the first thermoplastic material (111) and the second thermoplastic material (112) vary over a length (L3) of one or more of the one or more core-shell layer parts (3322).

10. The 3D item (1) according to any one of the preceding claims 8-9, wherein the plurality of layers (322) comprise one or more layer parts (3320) comprising one of the first thermoplastic material (111) and the second thermoplastic material (112).

11. The 3D item (1) according to any one of the preceding claims 8-10, wherein the core material (3021) of one or more of the one or more core-shell layer parts (3322) comprises the first thermoplastic material (111) and the shell material (2012) comprises the second thermoplastic material (112).

12. The 3D item (1) according to any one of the preceding claims 8-10, wherein the core material (3021) of one or more of the one or more core-shell layer parts (3322) comprises the second thermoplastic material (112), and wherein the shell material (2012) comprises the first thermoplastic material (111).

13. The 3D item (1) according to any one of the preceding claims 8-12, wherein (i) the first thermoplastic material has (ia) the first low glass transition temperature T_{LG1} of at maximum -20 °C, and (ib) the first high glass transition temperature T_{HG1} or the first high melting temperature T_{HM1} of at minimum 80 °C, and (ii) the second thermoplastic material (112) has one or more of the second glass transition temperature T_{G2} and the second melting temperature T_{M2} of at minimum 80 °C.

14. The 3D item (1) according to any one of the preceding claims 8-13, wherein the shell material (3012) comprises one or more of polycarbonate (PC), polysulfone (PSU), polyphenylene sulfide (PPS), polybutylene terephthalate (PBT), crystalline polyethylene terephthalate (PET), polyethylene naphthalate (PEN), polyether ether ketone (PEEK), and acrylonitrile butadiene styrene (ABS) ), PMMA, polystyrene, polypropylene, polyamide, and wherein the core material (3011) comprises one or more of a styrenic block copolymers, a thermoplastic polyolefin elastomer, a thermoplastic polyurethane elastomer, a thermoplastic copolyester elastomer, and a thermoplastic polyamide elastomer.

15. A lighting system (1000) comprising (a) a light source (10) configured to provide visible light source light (11) and (b) the 3D item (1) according to any one of the preceding claims 8-14, wherein the 3D item (1) is configured as one or more of (i) at least part of a housing and (ii) a functional component, and wherein the functional component is selected from the group consisting of an optical component, a support, an electrically insulating component, and a thermally conductive component.

## Patentansprüche

1. Verfahren, umfassend 3D-Drucken eines 3D-Elements (1) mittels Schmelzschichtung, wobei das Verfahren eine 3D-Druckstufe umfassend schichtweises Ablagern eines Extrudats (321) umfassend 3D-druckbares Material (201) umfasst, um das 3D-Element (1) umfassend 3D-gedrucktes Material (202) bereitzustellen, wobei während mindestens eines Teils der 3D-Druckstufe das Extrudat (321) ein Kern-Schale-Extrudat (1321) umfassend einen Kern (2321) umfassend ein Kernmaterial (2011), und eine Schale (2322) umfassend ein Schalenmaterial (2012) umfasst, wobei das Kernmaterial (2011) ein erstes thermoplastisches Material (111) umfasst und das Schalenmaterial (2012) ein zweites thermoplastisches Material (112) umfasst, das sich von dem ersten thermoplastischen Material (111) unterscheidet, oder das Kernmaterial (2011) das zweite thermoplastische Material (112) umfasst und das Schalenmaterial (2012) das erste thermoplastische Material (111) umfasst, **dadurch gekennzeichnet, dass** das erste thermoplastische Material (111) ein elastomeres Material mit einem Elastizitätsmodul in dem Bereich von 2 bis 200 MPa, einer ersten niedrigen Glasübergangstemperatur T_{LG1} von maximal 0 °C und einer ersten hohen Glasübergangstemperatur T_{HG1} oder einer ersten hohen Schmelztemperatur T_{HM1} von mindestens 60 °C ist, und wobei das zweite thermoplastische Material (112) einen Elastizitätsmodul in dem Bereich von 1 bis 10 GPa und eine oder mehrere einer zweiten Glasübergangstemperatur T_{G2} und einer zweiten Schmelztemperatur T_{M2} von mindestens 60 °C aufweist, wobei Elastizitätsmodule gemäß ASTM 638 gemessen werden.

2. Verfahren nach Anspruch 1, ferner umfassend das Steuern der relativen Mengen des ersten thermoplastischen Materials (111) und des zweiten thermoplastischen Materials (112) während der 3D-Druckstufe.

3. Verfahren nach einem der vorstehenden Ansprüche, ferner umfassend das Bereitstellen des Kern-Schale-Extrudats (1321) während eines oder mehrerer Zeitabschnitte der 3D-Druckstufe und das Bereitstellen eines Extrudats während eines oder mehrerer anderer Zeitabschnitte der 3D-Druckstufe, das eines von dem ersten thermoplastischen Material (111) und dem zweiten thermoplastischen Material (112) umfasst.

4. Verfahren nach einem der vorstehenden Ansprüche, wobei während eines oder mehrerer Zeitabschnitte der 3D-Druckstufe das Kernmaterial (2011) das erste thermoplastische Material (111) umfasst und das Schalenmaterial (2012) das zweite thermoplastische Material (112) umfasst.

5. Verfahren nach einem der vorstehenden Ansprüche, wobei während eines oder mehrerer Zeitabschnitte der 3D-Druckstufe das Kernmaterial (2011) das zweite thermoplastische Material (112) umfasst und das Schalenmaterial (2012) das erste thermoplastische Material (111) umfasst.

6. Verfahren nach einem der vorstehenden Ansprüche, wobei (i) das erste thermoplastische Material (ia) die erste niedrige Glasübergangstemperatur T_{LG1} von maximal -20 °C und (ib) die erste hohe Glasübergangstemperatur T_{HG1} oder die erste hohe Schmelztemperatur T_{HM1} von mindestens 80 °C aufweist und (ii) das zweite thermoplastische Material (112) eine oder mehrere der zweiten Glasübergangstemperatur T_{G2} und der zweiten Schmelztemperatur T_{M2} von mindestens 80 °C aufweist.

7. Verfahren nach einem der vorstehenden Ansprüche, wobei das Schalenmaterial (2012) eines oder mehrere von Polycarbonat (PC), Polysulfon (PSU), Polyphenylensulfid (PPS), Polybutylenterephthalat (PBT), kristallinem Polyethylenterephthalat (PET), Polyethylennaphthalat (PEN), Polyetheretherketon (PEEK) und Acrylnitril-Butadien-Styrol (ABS)), PMMA, Polystyrol, Polypropylen und Polyamid umfasst, und wobei das Kernmaterial (2011) eines oder mehrere von einem Styrolblock-Copolymeren, einem thermoplastischen Polyolefin-Elastomer, einem thermoplastischen Polyurethan-Elastomer, einem thermoplastischen Copolyester-Elastomer und einem thermoplastischen Polyamid-Elastomer umfasst.

8. 3D-Element (1) umfassend 3D-gedrucktes Material (202), wobei das 3D-Element (1) eine Vielzahl von Schichten (322) aus 3D-gedrucktem Material (202) umfasst, wobei die Vielzahl von Schichten (322) ein oder mehrere Kern-Schale-Schichtteile (3322) umfasst, wobei jedes der Kern-Schale-Schichtteile (3322) einen Kern (3321) umfassend ein Kernmaterial (3021), und eine Schale (3322) umfassend ein Schalenmaterial (3022) umfasst, wobei das Kernmaterial (3021) ein erstes thermoplastisches Material (111) umfasst und das Schalenmaterial (3022) ein zweites thermoplastisches Material (112) umfasst, das sich von dem ersten thermoplastischen Material (111) unterscheidet, oder das Kernmaterial (3021) das zweite thermoplastische Material (112) umfasst und das Schalenmaterial (3022) das erste thermoplastische Material (111) umfasst, **dadurch gekennzeichnet, dass** das erste thermoplastische Material (111) ein elastomeres Material mit einem Elastizitätsmodul in dem Bereich von 2 bis 200 MPa, einer ersten niedrigen Glasübergangstemperatur T_{LG1} von maximal 0 °C und einer ersten hohen Glasübergangstemperatur T_{HG1} oder einer ersten hohen Schmelztemperatur T_{HM1} von mindestens 60 °C ist, und wobei das zweite thermoplastische Material (112) einen Elastizitätsmodul in dem Bereich von 1 bis 10 GPa und eine oder mehrere von einer zweiten Glasübergangstemperatur T_{G2} und einer zweiten Schmelztemperatur T_{M2} von mindestens 60 °C aufweist, wobei Elastizitätsmodule gemäß ASTM638 gemessen werden.

9. 3D-Element (1) nach Anspruch 8, wobei die relativen Mengen des ersten thermoplastischen Materials (111) und des zweiten thermoplastischen Materials (112) über eine Länge (L3) von einem oder mehreren der einen oder mehreren Kern-Schale-Schichtteile (3322) variieren.

10. 3D-Element (1) nach einem der vorstehenden Ansprüche 8 bis 9, wobei die Vielzahl von Schichten (322) ein oder mehrere Schichtteile (3320) umfassend eines von dem ersten thermoplastischen Material (111) und dem zweiten thermoplastischen Material (112) umfasst.

11. 3D-Element (1) nach einem der vorstehenden Ansprüche 8 bis 10, wobei das Kernmaterial (3021) eines oder mehrerer der einen oder mehreren Kern-Schale-Schichtteile (3322) das erste thermoplastische Material (111) umfasst und das Schalenmaterial (2012) das zweite thermoplastische Material (112) umfasst.

12. 3D-Element (1) nach einem der vorstehenden Ansprüche 8 bis 10, wobei das Kernmaterial (3021) eines oder mehrerer der einen oder mehreren Kern-Schale-Schichtteile (3322) das zweite thermoplastische Material (112) umfasst, und wobei das Schalenmaterial (2012) das erste thermoplastische Material (111) umfasst.

13. 3D-Element (1) nach einem der vorstehenden Ansprüche 8 bis 12, wobei (i) das erste thermoplastische Material (ia) die erste niedrige Glasübergangstemperatur T_{LG1} von maximal -20 °C und (ib) die erste hohe Glasübergangstemperatur T_{HG1} oder die erste hohe Schmelztemperatur T_{HM1} von mindestens 80 °C aufweist und (ii) das zweite thermoplastische Material (112) eine oder mehrere von der zweiten Glasübergangstemperatur T_{G2} und der zweiten Schmelztemperatur T_{M2} von mindestens 80 °C aufweist.

14. 3D-Element (1) nach einem der vorstehenden Ansprüche 8 bis 13, wobei das Schalenmaterial (3012) eines oder mehrere von Polycarbonat (PC), Polysulfon (PSU), Polyphenylensulfid (PPS), Polybutylenterephthalat (PBT), kristallinem Polyethylenterephthalat (PET), Polyethylennaphthalat (PEN), Polyetheretherketon (PEEK) und Acrylnitril-Butadien-Styrol (ABS)), PMMA, Polystyrol, Polypropylen und Polyamid umfasst, und wobei das Kernmaterial (3011) eines oder mehrere von einem Styrolblock-Copolymeren, einem thermoplastischen Polyolefin-Elastomer, einem thermoplastischen Polyurethan-Elastomer, einem thermoplastischen Copolyester-Elastomer und einem thermoplastischen Polyamid-Elastomer umfasst.

15. Beleuchtungssystem (1000), umfassend (a) eine Lichtquelle (10), die konfiguriert ist, um sichtbares Lichtquellenlicht (11) bereitzustellen, und (b) das 3D-Element (1) nach einem der vorstehenden Ansprüche 8 bis 14, wobei das 3D-Element (1) als eines oder mehrere von (i) mindestens einem Teil eines Gehäuses und (ii) einer funktionalen Komponente konfiguriert ist, und wobei die funktionale Komponente aus der Gruppe bestehend aus einer optischen Komponente, einem Träger, einer elektrisch isolierenden Komponente und einer thermisch leitfähigen Komponente ausgewählt ist.

## Revendications

1. Procédé comprenant l'impression 3D d'un article 3D (1) au moyen d'une modélisation par dépôt en fusion, le procédé comprenant une phase d'impression 3D comprenant le dépôt en couches d'un extrudat (321) comprenant un matériau imprimable en 3D (201) pour fournir l'article 3D (1) comprenant un matériau imprimé en 3D (202), dans lequel pendant au moins une partie de la phase d'impression 3D l'extrudat (321) comprend un extrudat à noyau-enveloppe (1321) comprenant un noyau (2321) comprenant un matériau de noyau (2011), et une enveloppe (2322) comprenant un matériau d'enveloppe (2012), dans lequel le matériau de noyau (2011) comprend un premier matériau thermoplastique (111) et le matériau d'enveloppe (2012) comprend un deuxième matériau thermoplastique (112) différent du premier matériau thermoplastique (111), ou le matériau de noyau (2011) comprend le deuxième matériau thermoplastique (112) et le matériau d'enveloppe (2012) comprend le premier matériau thermoplastique (111), **caractérisé en ce que** le premier matériau thermoplastique (111) est un matériau élastomère ayant un module de Young dans la plage de 2 à 200 MPa, une première température de transition vitreuse basse T_{LG1} d'au maximum 0 °C, et une première température de transition vitreuse haute T_{HG1} ou une première température de fusion haute T_{HM1} d'au minimum à 60 °C, et dans lequel le deuxième matériau thermoplastique (112) a un module de Young dans la plage de 1 à 10 GPa, et une ou plusieurs parmi une deuxième température de transition vitreuse T_{G2} et une deuxième température de fusion T_{M2} d'au minimum 60 °C, dans lequel les modules de Young sont mesurés selon ASTM 638.

2. Procédé selon la revendication 1, comprenant en outre la commande des quantités relatives du premier matériau thermoplastique (111) et du deuxième matériau thermoplastique (112) pendant la phase d'impression 3D.

3. Procédé selon l'une quelconque des revendications précédentes, comprenant en outre la fourniture pendant une ou plusieurs périodes de temps de la phase d'impression 3D de l'extrudat à noyau-enveloppe (1321) et la fourniture pendant une ou plusieurs autres périodes de temps de la phase d'impression 3D d'un extrudat comprenant l'un du premier matériau thermoplastique (111) et du deuxième matériau thermoplastique (112).

4. Procédé selon l'une quelconque des revendications précédentes, dans lequel pendant une ou plusieurs périodes de temps de la phase d'impression 3D le matériau de noyau (2011) comprend le premier matériau thermoplastique (111) et le matériau d'enveloppe (2012) comprend le deuxième matériau thermoplastique (112).

5. Procédé selon l'une quelconque des revendications précédentes, dans lequel pendant une ou plusieurs périodes de temps de la phase d'impression 3D le matériau de noyau (2011) comprend le deuxième matériau thermoplastique (112) et le matériau d'enveloppe (2012) comprend le premier matériau thermoplastique (111).

6. Procédé selon l'une quelconque des revendications précédentes, dans lequel (i) le premier matériau thermoplastique a (ia) la première température de transition vitreuse basse T_{LG1} d'au maximum -20 °C, et (ib) la première température de transition vitreuse haute T_{HG1} ou la première température de fusion haute T_{HM1} d'au minimum à 80 °C, et (ii) le deuxième matériau thermoplastique (112) a une ou plusieurs de la deuxième température de transition vitreuse T_{G2} et de la deuxième température de fusion T_{M2} d'au minimum 80 °C.

7. Procédé selon l'une quelconque des revendications précédentes, dans lequel le matériau d'enveloppe (2012) comprend un ou plusieurs parmi les polycarbonate (PC), polysulfone (PSU), sulfure de polyphénylène (PPS), téréphtalate de polybutylène (PBT), téréphtalate de polyéthylène (PET) cristallin, naphtalate de polyéthylène (PEN), polyéther-éther-cétone (PEEK), et acrylonitrile-butadiène-styrène (ABS)), PMMA, polystyrène, polypropylène, polyamide, et dans lequel le matériau de noyau (2011) comprend un ou plusieurs parmi un copolymères séquencés styréniques, un élastomère de polyoléfine thermoplastique, un élastomère de polyuréthane thermoplastique, un élastomère de copolyester thermoplastique, et un élastomère de polyamide thermoplastique.

8. Article 3D (1) comprenant un matériau imprimé en 3D (202) dans lequel l'article 3D (1) comprend une pluralité de couches (322) de matériau imprimé en 3D (202), dans lequel la pluralité de couches (322) comprend une ou plusieurs parties de couche à noyau-enveloppe (3322), dans lequel chacune des parties de couche à noyau-enveloppe (3322) comprend un noyau (3321) comprenant un matériau de noyau (3021), et une enveloppe (3322) comprenant un matériau d'enveloppe (3022), dans lequel le matériau de noyau (3021) comprend un premier matériau thermoplastique (111) et le matériau d'enveloppe (3022) comprend un deuxième matériau thermoplastique (112) différent du premier matériau thermoplastique (111), ou le matériau de noyau (3021) comprend le deuxième matériau thermoplastique (112) et le matériau d'enveloppe (3022) comprend le premier matériau thermoplastique (111), **caractérisé en ce que** le premier matériau thermoplastique (111) est un matériau élastomère ayant un module de Young dans la plage de 2 à 200 MPa, une première température de transition vitreuse basse T_{LG1} d'au maximum 0 °C, et une première température de transition vitreuse haute T_{HG1} ou une première température de fusion haute T_{HM1} d'au minimum à 60 °C, et dans lequel le deuxième matériau thermoplastique (112) a un module de Young dans la plage de 1 à 10 GPa, et une ou plusieurs parmi une deuxième température de transition vitreuse T_{G2} et une deuxième température de fusion T_{M2} d'au minimum 60 °C, dans lequel les modules de Young sont mesurés selon ASTM638.

9. Article 3D (1) selon la revendication 8, dans lequel les quantités relatives du premier matériau thermoplastique (111) et du deuxième matériau thermoplastique (112) varient sur une longueur (L3) d'une ou plusieurs de la ou des parties de couche à noyau-enveloppe (3322).

10. Article 3D (1) selon l'une quelconque des revendications précédentes 8 à 9, dans lequel la pluralité de couches (322) comprennent une ou plusieurs parties de couche (3320) comprenant l'un du premier matériau thermoplastique (111) et du deuxième matériau thermoplastique (112).

11. Article 3D (1) selon l'une quelconque des revendications 8 à 10 précédentes, dans lequel le matériau de noyau (3021) d'une ou plusieurs de la ou des parties de couche à noyau-enveloppe (3322) comprend le premier matériau thermoplastique (111) et le matériau d'enveloppe (2012) comprend le deuxième matériau thermoplastique (112).

12. Article 3D (1) selon l'une quelconque des revendications précédentes 8 à 10, dans lequel le matériau de noyau (3021) d'une ou plusieurs de la ou des parties de couche à noyau-enveloppe (3322) comprend le deuxième matériau thermoplastique (112), et dans lequel le matériau d'enveloppe (2012) comprend le premier matériau thermoplastique (111).

13. Article 3D (1) selon l'une quelconque des revendications précédentes 8 à 12, dans lequel (i) le premier matériau thermoplastique a (ia) la première température de transition vitreuse basse T_{LG1} d'au maximum -20 °C, et (ib) la première température de transition vitreuse haute T_{HG1} ou la première température de fusion haute T_{HM1} d'au minimum 80 °C, et (ii) le deuxième matériau thermoplastique (112) a une ou plusieurs de la deuxième température de transition vitreuse T_{G2} et de la deuxième température de fusion T_{M2} d'au minimum 80 °C.

14. Article 3D (1) selon l'une quelconque des revendications précédentes 8 à 13, dans lequel le matériau d'enveloppe (3012) comprend un ou plusieurs parmi les polycarbonate (PC), polysulfone (PSU), sulfure de polyphénylène (PPS), téréphtalate de polybutylène (PBT), téréphtalate de polyéthylène (PET) cristallin, naphtalate de polyéthylène (PEN), polyéther-éther-cétone (PEEK), et acrylonitrile-butadiène-styrène (ABS)), PMMA, polystyrène, polypropylène, polyamide, et dans lequel le matériau de noyau (3011) comprend un ou plusieurs parmi un copolymères séquencés styréniques, un élastomère de polyoléfine thermoplastique, un élastomère de polyuréthane thermoplastique, un élastomère de copolyester thermoplastique, et un élastomère de polyamide thermoplastique.

15. Système d'éclairage (1000) comprenant (a) une source de lumière (10) configurée pour fournir de la lumière de source de lumière visible (11) et (b) l'article 3D (1) selon l'une quelconque des revendications précédentes 8 à 14, dans lequel l'article 3D (1) est configuré en tant qu'un ou plusieurs parmi (i) au moins une partie d'un logement et (ii) un composant fonctionnel, et dans lequel le composant fonctionnel est choisi dans le groupe constitué d'un composant optique, d'un support, d'un composant électriquement isolant, et d'un composant thermoconducteur.
